(19) Europäisches Patentamt
European Patent Office
Office européen des brevets

(11) **EP 4 535 635 A1**

(12) **EUROPEAN PATENT APPLICATION**

(43) Date of publication:
09.04.2025 Bulletin 2025/15

(21) Application number: 23202168.3

(22) Date of filing: 06.10.2023

(51) International Patent Classification (IPC):
**H02M 1/42** *(2007.01)*    **H02M 7/217** *(2006.01)*
**H02M 3/158** *(2006.01)*

(52) Cooperative Patent Classification (CPC):
**H02M 1/4208; H02M 7/217;** H02M 3/1582

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Infineon Technologies Austria AG
9500 Villach (AT)**

(72) Inventors:
• **WANG, Zhili
  Shenzhen 518000 (CN)**

• **WANG, Jin
  Shenzhen 518112 (CN)**
• **DI DOMENICO, Francesco
  9500 Villach (AT)**
• **GUO, Jinghong
  Shanghai 201203 (CN)**
• **SONG, Qingliang
  Shenzhen, 518048 (CN)**
• **KASPER, Matthias Joachim
  9500 Villach (AT)**
• **KIM, Kyoung Seop
  9500 Villach (AT)**

(74) Representative: **Kraus & Lederer PartGmbB
Thomas-Wimmer-Ring 15
80539 München (DE)**

(54) **POWER CONVERTER AND METHOD OF OPERATING A POWER CONVERTER**

(57)    According to an embodiment, a power converter comprises
a first input node (10) and a second input node (11), wherein the power converter is configured to receive an alternating current input voltage between the first input node (10) and a second input node (11), a first diode component ($D_1$) coupled between the first input node (10) and a first intermediate node (12), a second diode component ($D_2$) coupled between the second input node (11) and the first intermediate node (12), an inductor (L1), wherein a first terminal of the inductor (L1) is coupled to the first intermediate node (12) and a second terminal of the inductor (L1) is coupled to a second intermediate node (13), a first switch ($S_4$) coupled between the first input node (10) and the second intermediate node (13), a second switch ($S_3$) coupled between the second input node (11) and the second intermediate node (13), a capacitor (C1), and a third diode component ($D_3$) coupled between the second intermediate node (13) and a first terminal of the capacitor (C1). The first terminal of the inductor (L1) and a second terminal of the capacitor (C1) are coupled to a reference potential.

Fig. 1

EP 4 535 635 A1

## Description

TECHNICAL FIELD

The present application relates to power converters and to methods of operating power converters.

BACKGROUND

Power converters are generally used to convert an input electrical power to an output electrical power. For example, a mains AC (alternating current) voltage of e.g., 110 V or 220 V, depending on the country, may be converted to a DC (direct current) voltage of 5 V, 12 V, 24 V or any other voltage required for a particular application. Various kinds of power converters are conventionally known, like buck converters, boost converters, buck-boost converters, flyback converters, etc.

In some applications, more than one power converter stage is used in a power converter. For example, a first stage may be used for so called power factor correction, which reduces losses due to the real power not matching the apparent power in the system. This first stage converts the input AC power to an intermediate DC voltage, also referred to as bus voltage. As such a first stage, for example buck converters, boost converters or buck-boost converters may be used. A second stage, for example a flyback converter, then converts the bus voltage to the desired output voltage.

It is generally desirable that power converters used, for example used for power factor correction, exhibit high efficiency/low losses, and use a small number of components to keep a bill of materials (BOM) low.

SUMMARY

A power converter as defined in claim 1 and a method as defined in claim 11 are provided. The dependent claims define further embodiments. A corresponding controller as defined in claim 12, a system as defined in claim 13 and a computer program as defined in claim 14 are also provided.

According to an embodiment, a power converter is provided, comprising:

a first input node and a second input node, wherein the power converter is configured to receive an alternating current input voltage between the first input node and the second input node,
a first diode component coupled between the first input node and a first intermediate node,
a second diode component coupled between the second input node and the first intermediate node,
an inductor, wherein a first terminal of the inductor is coupled to the first intermediate node and a second terminal of the inductor is coupled to a second intermediate node,
a first switch coupled between the first input node and the second intermediate node,
a second switch coupled between the second input node and the second intermediate node,
a capacitor, and
a third diode component coupled between the second intermediate node and a first terminal of the capacitor,
wherein the first terminal of the inductor and a second terminal of the capacitor are coupled to a reference potential.

According to another embodiment, a method of operating a power converter as mentioned above is provided, comprising:

- during a phase where an input voltage has a positive polarity, in a positive charging phase switching the second switch on and the first switch off and during a discharge phase switching both the first and second switches off, and
- during a phase where the input voltage has a negative polarity, in a charging phase switching first switch on and second switch off, and during a discharge phase switching both first and second switches off.

The above summary is merely a brief overview over some features of some embodiments and is not to be construed as limiting in any way.

BRIEF DESCRIPTION OF THE DRAWINGS

Fig. 1 is a circuit diagram of a power converter according to an embodiment.

Figures 2A-2D are diagrams illustrating operation of the power converter according to some embodiments.

Fig. 3 illustrates waveforms for the operation of Figures 2A-2B.

Figures 4-6 are signal diagrams further illustrating the operation of the embodiment of Fig. 1.

Figures 7A-7C are signal diagrams illustrating the operation of the embodiment of Fig. 1 in different modes.

Fig. 8 is a circuit diagram illustrating a power converter according to a further embodiment.

Figures 9A and 9B are circuit diagrams illustrating power converters according to further embodiments.

Fig. 10 is a block diagram illustrating a power converter according to a further embodiment.

DETAILED DESCRIPTION

In the following, various embodiments will be described in detail referring to the attached drawings. These embodiments are given by way of example only and are not to be construed as limiting.

Any connections or couplings shown in the drawings or described herein refer to electrical connections or couplings unless noted otherwise. Such connections or couplings are to be understood in a functional way, i.e., to provide a certain function within the circuits discussed herein. The connections or couplings may be modified for example by adding or removing elements, as long as the respective function of the connection or coupling is preserved. Embodiments discussed herein use diode components. A diode component, as used herein, is a component that is or includes a diode. For example, a diode component may be a PN diode, a PIN diode, a transistor coupled as a diode, a transistor having a body diode (which is then the diode of the diode component), and which may remain in a switched off state such that only the diode is operative, etc.

Switches as used herein may be implemented as transistor switches. In particular, switches may be implemented as bidirectional switches. A bidirectional switch, when switched off, does not conduct current in either direction. Bidirectional switches may be implemented using gallium nitride (GaN) transistors, where body diodes, if present, have a high forward voltage and therefore in the voltage range the transistor is intended for does not conduct current, or may be switched off for both current directions by applying a negative gate voltage. Conventional MOSFET transistors per se usually do not qualify as bidirectional switches because of their body diode. However, a bidirectional switch may be constructed based on two MOSFET transistors in series with opposite orientations of source and drain. Other transistor types than field effect transistors may also be used, like bipolar junction transistors (BJTs) or insulated gate bipolar transistors (IGBTs), such that showing and describing specific transistor types herein is not to be construed as limiting.

A switch is referred to as off or opened when it is essentially non-conducting between its terminals, and as on or closed if it conducts current between its terminals.

Embodiments herein relate to a new topology of power converters which essentially may act as buck-boost converters, i.e., converting an input voltage to a higher or lower output voltage. Such converters as described herein may be used as standalone power converters, but may also be used as a stage of a multistage power converter, for example a power factor correction stage.

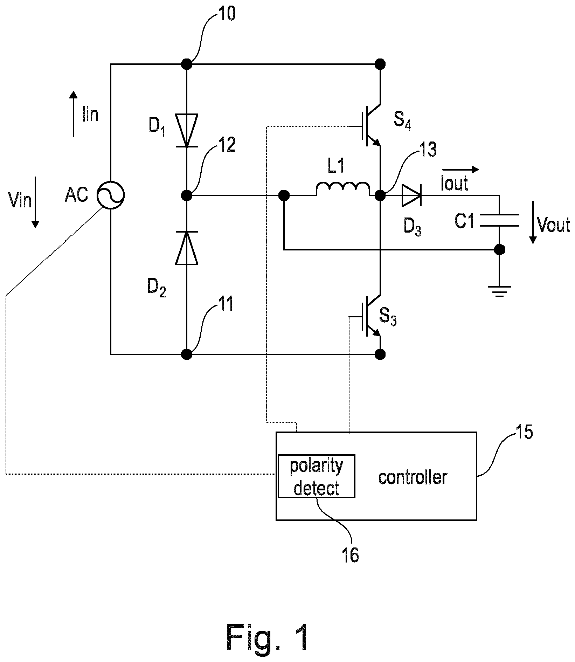

Turning now to the figures, Fig. 1 is a circuit diagram of a power converter according to an embodiment.

The power converter of Fig. 1 comprises a first input node 10 and a second input node 11. An AC input voltage, symbolized by a current source AC, in operation is coupled between first input node 10 and second input node 11. A current supplied to the power converter in operation is labelled Iin in Fig. 1, and a corresponding input voltage Vin.

A first diode $D_1$ is coupled between first input node 10 and intermediate node 12, and a second diode $D_2$ is coupled between second input node 11 and intermediate node 12. In Fig. 1, the polarities of diodes $D_1$ and $D_2$ are opposite each other, such that for both diodes, the anode sides are coupled to the respective first or second input terminal 10, 11 and both cathode sides are coupled to intermediate node 12.

An inductor L1 is coupled between first intermediate node 12 and a second intermediate node 13. In particular, a first terminal of inductor L1 is coupled to first intermediate node 12, and a second terminal of inductor L1 is coupled to a second intermediate node 13.

A first switch $S_4$ is coupled between first input terminal 10 and second intermediate node 13, and a second switch $S_3$ is coupled between second input terminal 11 and second intermediate node 13. Switches $S_4$, $S_3$ may be bidirectional switches, for example GaN (Gallium Nitride) based switches. A diode $D_3$ is coupled between second intermediate node 13 and a first terminal of an output capacitor C1, with an anode side towards second intermediate node 13 and a cathode side towards a first terminal of capacitor C1.

The first terminal of inductor L1 and a second terminal of capacitor C1 are coupled to ground as shown. In Fig. 1 they are coupled with each other and then to ground, but in other embodiments they may be connected to (the same) ground separately. Instead of ground, another reference potential may also be used. An output current Iout is supplied by an output voltage Vout across capacitor C1 as shown. The arrows at Iin, Iout and Vout denote the positive direction of the corresponding current or voltage used in signal graphs in the following.

The dimensioning of inductor L1 and capacitor C1 may be selected based on an intended operation range of the power converter. For example, an inductance L of inductor L1 may at least approximately be selected according to:

$$L = \frac{Vin^2 \times Vout}{\Delta \times Pmax \times (Vin + Vout) \times fs}$$

wherein Vin is the input voltage, Vout is the output voltage, $\Delta$ is a ripple of the inductor current, Pmax is the output power, and fs is the switching frequency of the first and second switches. In case of ranges (e.g. input voltage range, output voltage range etc.), mean values, maximum values typical values or values resulting in maximum loading of the inductor L of the ranges may be used for selecting L.

A capacitance value C of capacitor C1 may be determined according to:

$$C = \frac{2 \times Pmax \times thold}{Vout^2 - Voutmin^2}$$

wherein thold is the hold up time, i.e., the maximum time the output voltage is to remain within an operating range of the output voltage after the AC input voltage is turned off and Voutmin is a minimum output voltage the power converter is intended for. As can be seen, if longer hold-up times and/or higher maximum output powers are required in an application, a larger capacitance value has to be used.

Operation of the power converter of Fig. 1 may be controlled by controller 15. The term controller is not to be construed as limiting and refers to any entity which is capable of controlling the power converter for the functions explained below, and may for example include a microprocessor programmed accordingly, an application specific integrated circuit (ASIC), gate drivers for driving switches $S_3$ and $S_4$ etc.

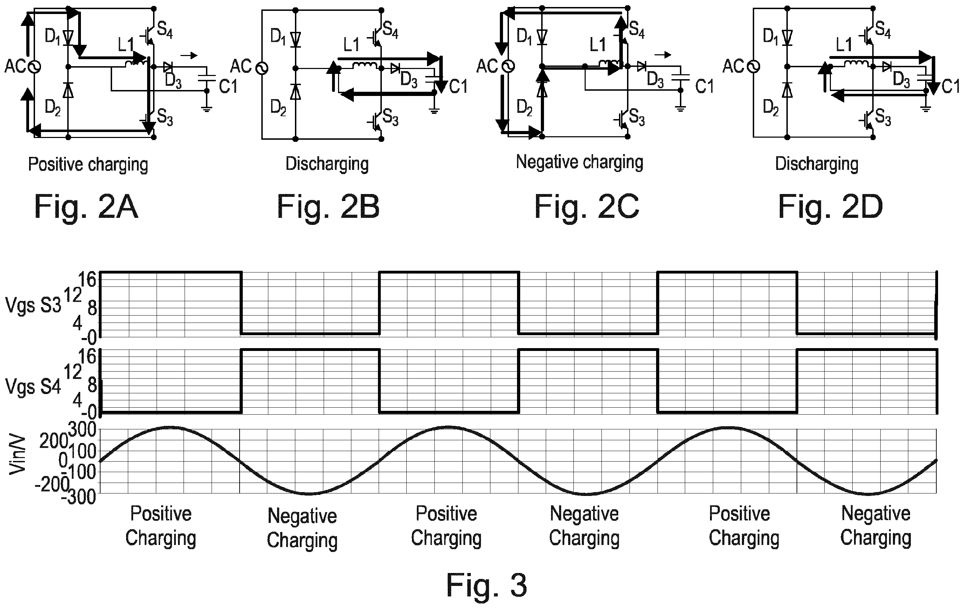

Operation of the power converter of Fig. 1 will now be explained with reference to Figures 2A-2D, which illustrate a method of operation of the power converter of Fig. 1, and to Figures 3-7 which show example signals and waveform for illustrating the operation of the power converter. It should be noted that the waveforms of the signals shown are simple examples and are not to be construed as limiting, as actual waveforms may vary depending on the implementation and may also be subject to noise or other disturbances, which are not shown in the figures. In other words, the figures essentially show ideal waveforms.

During operation, when the input voltage between input terminals 10, 11, is positive, a positive charging operation may occur, and when the input voltage is negative, a negative charging operation may occur. As can be seen, controller 15 may receive the input voltage to determine the polarity thereof using a polarity detection component 16 and control the power converter accordingly. For polarity detection, any conventional polarity detection circuit may be used. For example, the two poles of the input voltage may be provided to a differential amplifier, which depending on the polarity output a positive or negative value, which may then be compared to a reference value to determine the polarity. After each charging operation, a discharging operation may follow where energy is transferred to the output (Iout, Vout in Fig. 1).

Figures 2A-2D each reproduce the power converter of Fig. 1, with arrows illustrating the current flow.

Fig. 2A illustrates the positive charging. This is the situation when a positive input voltage and input current Iin are provided by the AC source. In this case, as shown in Fig. 3 for each positive charging period where the input voltage Vin is greater than zero, by applying corresponding gate source voltages, second switch $S_3$ is switched on, and first switch $S_4$ is switched off. In this case, the current flows via diode $D_1$ through inductor L1 and switch S3 back to source AC.

The negative charging phase is shown in Fig. 2C, when the input voltage is negative. Here, as can also be seen in Fig. 3, by applying corresponding gate source voltages to switches $S_3$ and $S_4$, first switch $S_4$ is on, and second switch $S_3$ is off. Here, as shown in Fig. 2C, current flows from the AC source via diode $D_2$, inductor L1 and switch $S_4$ back to the AC source. Note that in both cases, during positive charging as shown in Fig. 2A and during negative charging as shown in Fig. 2C, current flows through inductor L1 in the same direction, thus storing energy in the inductor.

The discharging phases following the positive charging phase, shown in Fig. 2B, and following the negative charging phase, shown in Fig. 2D, are the same. Here, both switches $S_3$ and $S_4$ are switched off, and current flows from inductor L1 through diode $D_3$ to capacitor C1 (and back via ground to inductor L1), thus transferring energy to the output, building up the output voltage Vout and supplying the output current Iout.

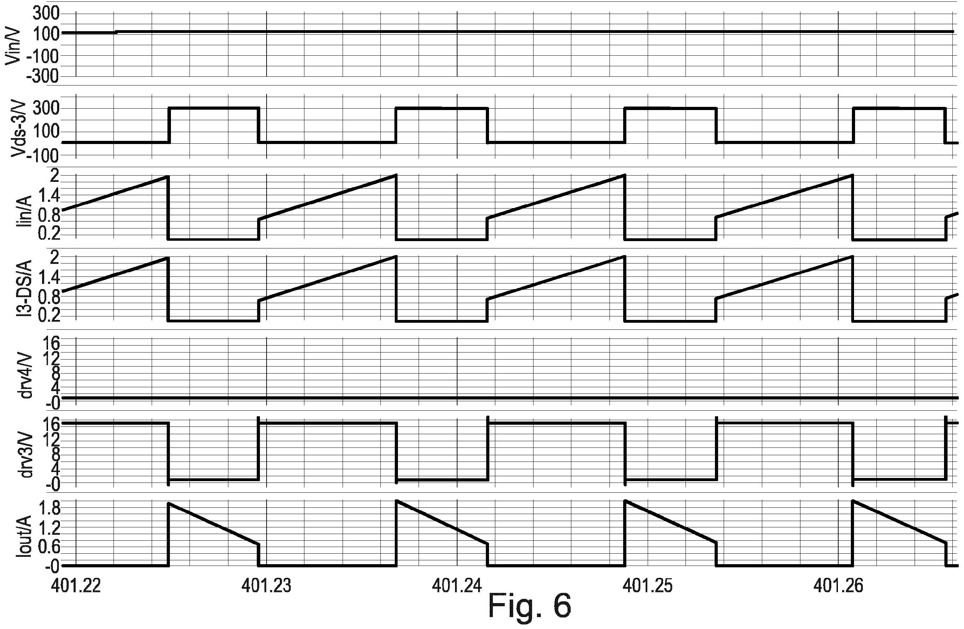

A magnitude of the output power, for example output voltage, may be regulated by a corresponding duty cycle between the charging phase and the discharging phase. During each halfwave of positive input voltage and negative input voltage, there may be one or more charging phases and one or more discharging phases, as will be illustrated further below referring to Fig. 6.

Generally, in the power converter of Fig. 1, the output voltage is related to the input voltage by Vout=D·-Vin/(1-D), where D is the duty cycle, or, in other words, D=Vout/(Vout+Vin). Therefore, based on the given input voltage (for example determined by the mains voltage) and a required output voltage, the duty cycle is determined, e.g., by controller 15 of Fig. 1.

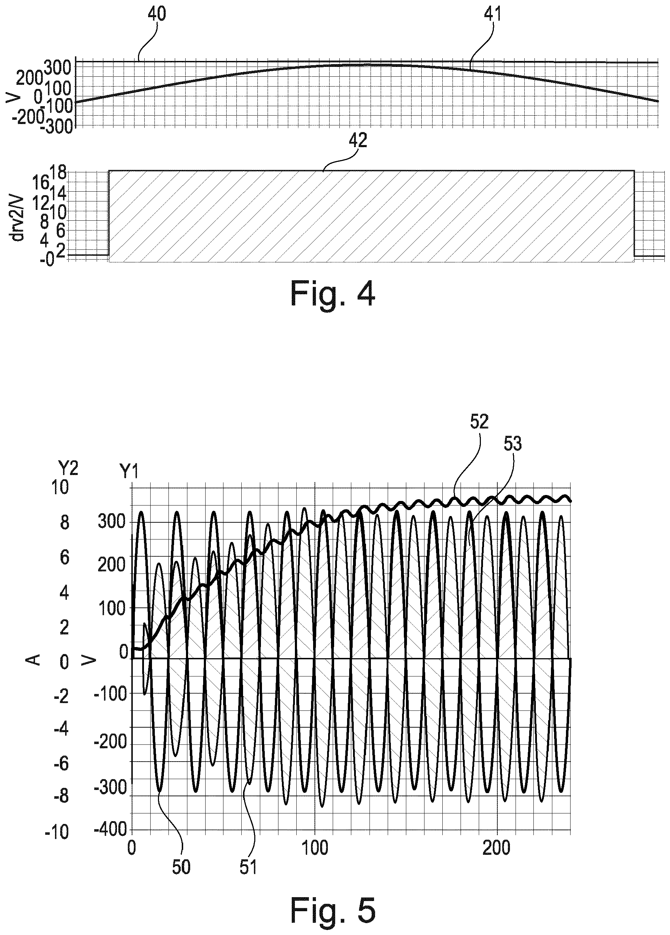

Figures 4 and 5 illustrate the positive charging in more detail, the negative charging is similar. Fig. 4 illustrates one positive charging halfwave, where a curve 41 represents the input voltage, a curve 40 represents the output voltage and a curve 42 represents the gate source voltage of switch $S_3$, $S_3$ is switched on during the positive charging and switched off during discharge phase, which happens repeatedly during the positive charging. Fig. 5 illustrates the initial buildup of the output voltage Vout. A curve 50 represents the AC input voltage, a curve 51 represents the input current Iin (both positive and negative), a curve 53 represents the output current Iout and a curve 52 represents the output voltage Vout. As can be seen, the output voltage is built up and then, with a certain ripple, is held at a constant value.

Fig. 6 shows further signals within one charging cycle, i.e., a short time during signal 42 in Fig. 4, near the maximum of input voltage 41. Therefore, on the shorter time scale of Fig. 6, the input voltage Vin seems almost constant at 300 volts, as an example.

Further shown are the drain source voltage VDS-3 of second switch $S_3$, the input current Iin, the drain source current I3-DS through second switch $S_3$, the voltage at the drain of first switch $S_4$, dn4, the voltage at the drain of switch $S_3$, dn3, the output voltage Vout and the output current Iout. As can be seen from the driver voltages drv3 and drv4, first switch $S_4$ is off all the time, whereas drv3 switches second switch $S_3$ on and off with a certain duty cycle, as shown. As can also be seen in Fig. 6, the output current Iout flows when drv3 is low, i.e., during the discharge phase illustrated in Fig. 2D. Also, the input current Iin flows when drv3 switches second switch $S_3$ on, corresponding to Fig. 2A. As can be seen, the output voltage Vout is kept at about 175 volts, with some ripple.

The control may be performed in various modes. Generally, a fixed control frequency or a varying control frequency may be used. In a fixed control frequency, an on-time of the respective switch ($S_3$ during positive input voltage, $S_4$ during negative input voltage) + an off-time Toff is a constant period and frequency. With a variable frequency, Ton+Toff is not constant. For example, one of Ton or Toff may be kept constant, and the other one of Ton and Toff may be regulated.

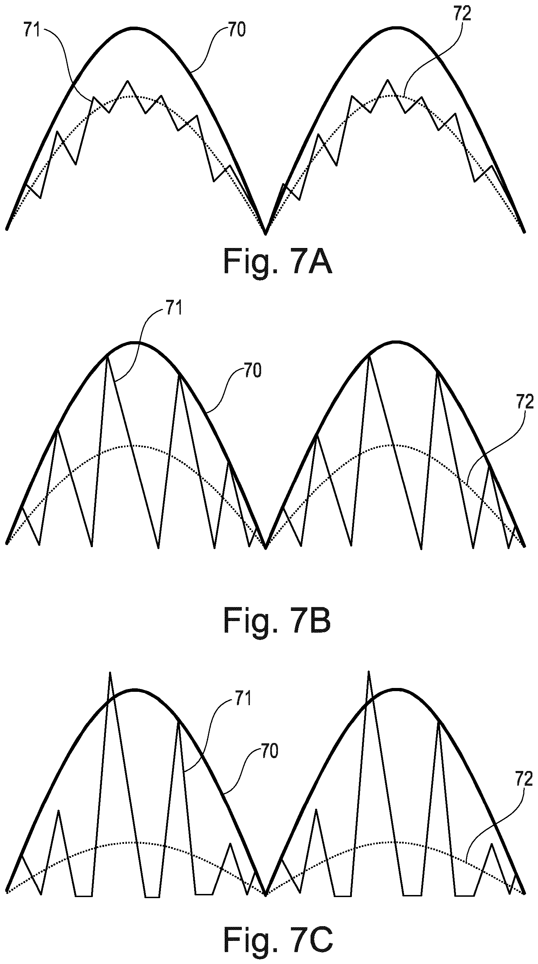

Furthermore, various per se conventional modes of operation may be used, for example continuous conduction mode (CCM) operation, critical conduction mode (CAM) or discontinuous conduction mode (DCM). These three alternatives are shown in Fig. 6A, 7B and 7C, where Fig. 7A illustrates continuous conduction mode operation, Fig. 7B illustrates critical conduction mode operation, and Fig. 7C illustrates discontinuous conduction mode operation. In each of Figures 7A-7C, a curve 70 illustrates the input AC voltage (shown as positive half-waves only), a curve 71 shows the inductor current through inductor L1, and a curve 72 shows a mean of the inductor current.

With all these control modes, a corresponding output voltage may be obtained. For example, a discontinued conduction mode may be used at low loads, while a continuous conduction mode may be used at higher loads. However, all modes can also be used at full load.

Next, variations of the embodiment of Fig. 1 will be discussed.

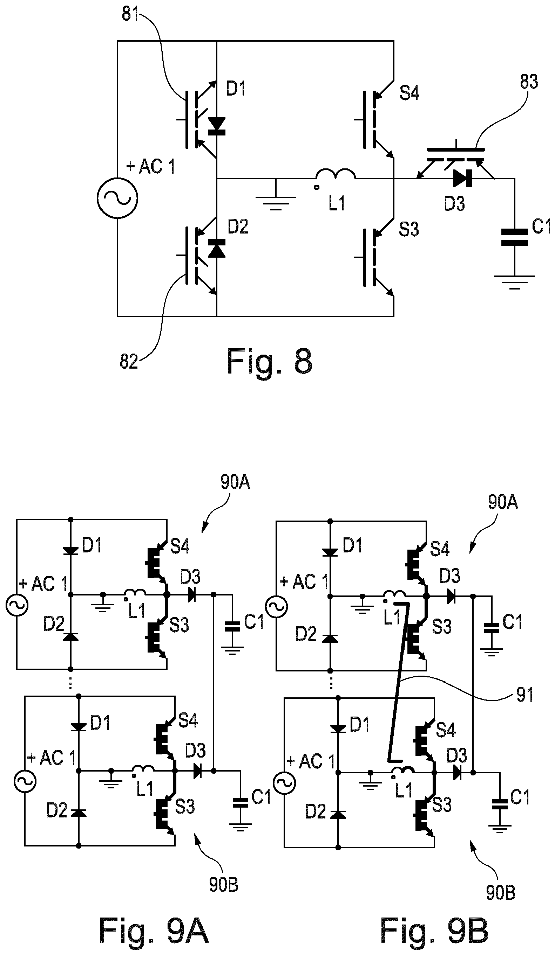

Fig. 8 shows an alternative where instead of diodes $D_1$, $D_2$ and $D_3$, transistors 81, 82 and 83 including a respective diode $D_1$, $D_2$ and $D_3$ as body diode are used. Any transistors having such body diodes may be used, for example MOSFETS or also insulated gate bipolar transistors with diodes. The transistors themselves may be switched off, for example as normally off-switches, such that the respective body diode essentially performs the function of diode $D_1$-$D_3$ in Fig. 1. It should be noted that in other embodiments, only some of the diodes may be replaced by such transistors, for example only diodes $D_1$ and $D_2$. In yet other embodiments, transistors coupled as diodes may be used. In this sense, as explained initially, any suitable diode component which fulfills the function of diodes $D_1$, $D_2$ and $D_3$ of Fig. 1 may be used.

Additionally or alternatively, a plurality of power converters as discussed above, including the variations discussed with reference to Fig. 8, may be coupled in parallel. Fig. 9A shows a first example where two power converters 90A, 90B, each designed as discussed above, are coupled in parallel. As indicated by dots, also more than two converters may be used. Nodes between the respective diodes $D_3$ and capacitors C1 are coupled with each other, to provide a common output. While in Fig. 9A two separate output capacitors C1 are shown, also a single output capacitor may be used. In some embodiments, the different power converters 90A, 90B may have operate with input signals having a phase offset, to provide an output signal having a reduced ripple. Also, connecting a plurality of power converters may increase the overall output power.

Fig. 9B shows a variation of the embodiment of Fig. 9A, where the inductors L1 of the power converters are arranged close to each other, such that an inductive coupling is provided between the power converters, as indicated by a line 91 in Fig. 9B. Also, core elements having corresponding magnetic properties may be used to effect the coupling. Such a coupling may reduce magnetic losses and therefore improve efficiency or enable the use of inductors of smaller size in some embodiments.

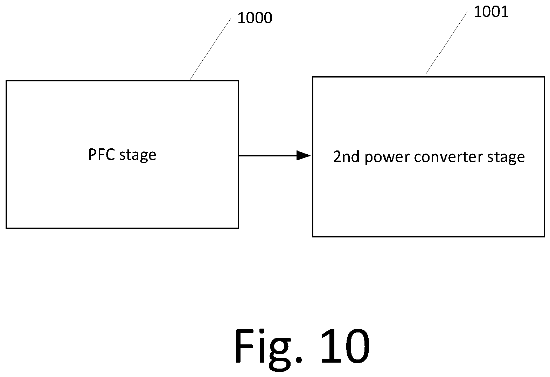

As mentioned above, power converters as discussed herein may be used alone, or as a stage in a multistage power converter. An example is shown in Fig. 10.

Fig. 10 illustrates a power converter including a power factor correction (PFC) stage 1000. PFC stage 1000 includes the power converter as discussed above with reference to Figures 1-9. The output voltage Vout of the power converter serves as bus voltage, i.e., as input voltage of second power correction stage 1001. In some embodiments, second power correction stage 1001 may include a flyback converter.

The power converters discussed above require less components, for example less diodes than conventional buck-boost converters. This may lead to a higher efficiency. For example, simulations have shown, depending on input voltage, an efficiency improvement between 0,5 and 6%, mainly due to reduced conduction losses of semiconductor components.

Some embodiments may be defined by the following examples:

Example 1. A power converter, comprising:

a first input node and a second input node, wherein the power converter is configured to receive an alternating current input voltage between the first input node and a second input node,

a first diode component coupled between the first input node and a first intermediate node,

a second diode component coupled between the second input node and the first intermediate node,

an inductor, wherein a first terminal of the inductor is coupled to the first intermediate node and a second terminal of the inductor is coupled to a second intermediate node,

a first switch coupled between the first input node and the second intermediate node,

a second switch coupled between the second input node and the second intermediate node,

a capacitor, and

a third diode component coupled between the second intermediate node and a first terminal of the capacitor wherein the first terminal of the inductor and a second terminal of the capacitor are coupled to a reference potential.

Example 2. The power converter of example 1, wherein the first diode component and the second diode component are coupled in series via the first intermediate node with opposing polarities.

Example 3. The power converter of example 1 or 2, wherein a cathode side of the first diode component and a cathode side of the second diode component face the first intermediate node.

Example 4. The power converter of any one of examples 1-3, wherein a cathode side of the third diode component of the third diode component faces the first terminal of the capacitor.

Example 5. The power converter of any one of examples 1-4, wherein the first switch and the second switch are bidirectional switches.

Example 6. The power converter of any one of examples 1-5, wherein at least one of the first switch and the second switch comprises a gallium nitride-based switch.

Example 7. The power converter of any one of examples 1-6, wherein at least one of the first diode component, the second diode component and the third diode component is selected from the group consisting of a PN diode, a PIN diode, and a transistor including a body diode.

Example 8. A power converter, comprising:

a first power converter as defined in any one of examples 1-7,

a second power converter as defined in any one of examples 1-7,

wherein the first terminal of the capacitor of the first power converter is coupled to the first terminal of the capacitor of the second power converter, or wherein the capacitor of the first power converter and the capacitor of the second power converter are implemented as a joint capacitor.

Example 9. The power converter of example 8, wherein the inductor of the first power converter is inductively coupled to the inductor of the second power converter.

Example 10. A power converter system, comprising:

a power factor correction stage comprising the power converter of any one of examples 1-9, and

a second power converter stage receiving its input voltage from the first power factor correction stage.

Example 11. A method of operating the power converter of any one of examples 1-10, comprising:

- during a phase where an input voltage has a positive polarity, in a positive charging phase switching the second switch on and the first switch off and during a discharge phase switching both the first and second switches off, and
- during a phase where the input voltage has a negative polarity, in a charging phase switching first switch on and second switch off, and during a discharge phase switching both first and second switches off.

Example 12. A controller for the power converter of any one of any one of examples 1 to 10, wherein the controller in configured to operate the power converter to:

- during a phase where an input voltage has a positive polarity, in a positive charging phase switch the second switch on and the first switch off and during a discharge phase switch both the first and second switches off, and
- during a phase where the input voltage has a negative polarity, in a charging phase switch first switch on and second switch off, and during a discharge phase switch both first and second switches off.

Example 13. A system, comprising the power converter of any one of examples 1 to 10 and the controller of example 12.

Example 14. A computer program comprising instructions which, when the program is executed by a controller, cause the controller to carry out the method of example 11.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

**Claims**

1. A power converter, comprising:

   a first input node (10) and a second input node (11), wherein the power converter is configured to receive an alternating current input voltage between the first input node (10) and a second input node (11),
   a first diode component ($D_1$; 81) coupled between the first input node (10) and a first intermediate node (12),
   a second diode component ($D_2$; 82) coupled between the second input node (11) and the first intermediate node (12),
   an inductor (L1), wherein a first terminal of the inductor (L1) is coupled to the first intermediate node (12) and a second terminal of the inductor (L1) is coupled to a second intermediate node (13),
   a first switch ($S_4$) coupled between the first input node (10) and the second intermediate node (13),
   a second switch ($S_3$) coupled between the second input node (11) and the second intermediate node (13),
   a capacitor (C1), and
   a third diode component ($D_3$; 83) coupled between the second intermediate node (13) and a first terminal of the capacitor (C1)
   wherein the first terminal of the inductor (L1) and a second terminal of the capacitor (C1) are coupled to a reference potential.

2. The power converter of claim 1, wherein the first diode component ($D_1$; 81) and the second diode component ($D_2$; 82) are coupled in series via the first intermediate node (12) with opposing polarities.

3. The power converter of claim 1 or 2, wherein a cathode side of the first diode component ($D_1$; 81) and a cathode side of the second diode component ($D_2$; 82) face the first intermediate node (12).

4. The power converter of any one of claims 1-3, wherein a cathode side of the third diode component of the third diode component ($D_3$; 83) faces the first terminal of the capacitor (C1) .

5. The power converter of any one of claims 1-4, wherein the first switch ($S_4$) and the second switch ($S_3$) are bidirectional switches.

6. The power converter of any one of claims 1-5, wherein at least one of the first switch ($S_4$) and the second switch ($S_3$) comprises a gallium nitride-based switch.

7. The power converter of any one of claims 1-6, wherein at least one of the first diode component ($D_1$; 81), the second diode component ($D_2$; 82) and the third diode component ($D_3$; 83) is selected from the group consisting of a PN diode, a PIN diode, and a transistor including a body diode.

8. A power converter, comprising:

   a first power converter as defined in any one of claims 1-7,
   a second power converter as defined in any one of claims 1-7,
   wherein the first terminal of the capacitor of the first power converter is coupled to the first terminal of the capacitor of the second power converter, or wherein the capacitor of the first power converter and the capacitor of the second power converter are implemented as a joint capacitor.

9. The power converter of claim 8, wherein the inductor of the first power converter is inductively coupled to the inductor of the second power converter.

10. A power converter system, comprising:

    a power factor correction stage comprising the power converter of any one of claims 1-9, and
    a second power converter stage receiving its input voltage from the first power factor correction stage.

11. A method of operating the power converter of any one of claims 1-10, comprising:

    - during a phase where an input voltage has a positive polarity, in a positive charging phase switching the second switch ($S_3$) on and the first switch ($S_4$) off and during a discharge phase switching both the first and second switches ($S_3$, $S_4$) off, and
    - during a phase where the input voltage has a negative polarity, in a charging phase switching first switch ($S_4$) on and second switch ($S_3$) off, and during a discharge phase switching both first and second switches ($S_1$, $S_2$) off.

12. A controller (15) for the power converter of any one of any one of claims 1 to 10, wherein the controller (15) in configured to operate the power converter to:

- during a phase where an input voltage has a positive polarity, in a positive charging phase switch the second switch ($S_3$) on and the first switch ($S_4$) off and during a discharge phase switch both the first and second switches ($S_3$, $S_4$) off, and
- during a phase where the input voltage has a negative polarity, in a charging phase switch first switch ($S_4$) on and second switch ($S_3$) off, and during a discharge phase switch both first and second switches ($S_1$, $S_2$) off.

13. A system, comprising the power converter of any one of claims 1 to 10 and the controller (15) of claim 12.

14. A computer program comprising instructions which, when the program is executed by a controller, cause the controller to carry out the method of claim 11.

Fig. 1

Positive charging
Fig. 2A

Discharging
Fig. 2B

Negative charging
Fig. 2C

Discharging
Fig. 2D

Fig. 3

EP 4 535 635 A1

Fig. 4

Fig. 5

Fig. 6

Fig. 7A

Fig. 7B

Fig. 7C

Fig. 8

Fig. 9A          Fig. 9B

1000

1001

```
┌──────────────────────┐          ┌──────────────────────────┐
│                      │          │                          │
│                      │          │                          │
│      PFC stage       │─────────▶│  2nd power converter stage│
│                      │          │                          │
│                      │          │                          │
└──────────────────────┘          └──────────────────────────┘
```

# Fig. 10

Europäisches
Patentamt

European
Patent Office

Office européen
des brevets

# EUROPEAN SEARCH REPORT

Application Number

EP 23 20 2168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BANAGAR MARUTHI ET AL: "Design and simulation of bridgeless PFC buck boost converter fed BLDC motor drive", 2017 INNOVATIONS IN POWER AND ADVANCED COMPUTING TECHNOLOGIES (I-PACT), IEEE, 21 April 2017 (2017-04-21), pages 1-7, XP033287574, DOI: 10.1109/IPACT.2017.8244880 [retrieved on 2018-01-02] * figures 1-5 * | 1-14 | INV.<br>H02M1/42<br>H02M7/217<br><br>ADD.<br>H02M3/158 |
| X | ZHAO BEN ET AL: "Family of Bridgeless Buck-Boost PFC Rectifiers", IEEE TRANSACTIONS ON POWER ELECTRONICS, INSTITUTE OF ELECTRICAL AND ELECTRONICS ENGINEERS, USA, vol. 30, no. 12, 1 December 2015 (2015-12-01), pages 6524-6527, XP011667353, ISSN: 0885-8993, DOI: 10.1109/TPEL.2015.2445779 [retrieved on 2015-08-24] * figure 1a; table II * | 1-14 | |
| X | HOU XIAOHAN ET AL: "A Novel Lower Inductance Quasi-bridgeless Active Power Factor Corrector", 2019 14TH IEEE CONFERENCE ON INDUSTRIAL ELECTRONICS AND APPLICATIONS (ICIEA), IEEE, 19 June 2019 (2019-06-19), pages 1307-1312, XP033616251, DOI: 10.1109/ICIEA.2019.8833951 [retrieved on 2019-09-11] * figure 2b * | 1-14 | |

TECHNICAL FIELDS
SEARCHED (IPC)

H02M

-/--

The present search report has been drawn up for all claims

| Place of search | Date of completion of the search | Examiner |
|---|---|---|
| The Hague | 20 March 2024 | Madouroglou, E |

EPO FORM 1503 03.82 (P04C01)

page 1 of 2

Europäisches
Patentamt

European
Patent Office

Office européen
des brevets

# EUROPEAN SEARCH REPORT

Application Number

EP 23 20 2168

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 233 298 B2 (JANG YUNGTAEK [US]; JOVANOVIC MILAN M [US]; DELTA ELECTRONICS INC [TW]) 31 July 2012 (2012-07-31)<br>* figure 7 * | 8,9 | |

TECHNICAL FIELDS
SEARCHED      (IPC)

The present search report has been drawn up for all claims

| Place of search | Date of completion of the search | Examiner |
|---|---|---|
| The Hague | 20 March 2024 | Madouroglou, E |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

**EP 23 20 2168**

This annex lists the patent family members relating to the patent documents cited in  the above-mentioned European search report.
The members are as contained in the European Patent Office EDP file on
The European Patent Office is in no way liable for these particulars which are merely given for the purpose of information.

**20-03-2024**

| Patent document cited in search report | | Publication date | Patent family member(s) | Publication date |
|---|---|---|---|---|
| US 8233298 | B2 | 31-07-2012 | NONE | |